# EUROPEAN PATENT APPLICATION

(11) **EP 2 141 338 A2**
(43) Date of publication of application: **06.01.2010**
(21) Application number: 09251662.4
(22) Date of filing: 26.06.2009
(51) Int. Cl.: F02C 7/232, F02C 9/26

(54) **Control system**

(30) Priority: 30.06.2008 GB 0811888
(71) Applicant: Goodrich Control Systems Limited, Solihull, West Midlands B90 4LA (GB)
(72) Inventor: Rawlinson, Neil, Kenilworth, Warwickshire CV8 1DL (GB); Yates, Martin Kenneth, East Haddon, Northamptonshire NN6 8DB (GB); Bradbury, William Keith, Solihull, West Midlands B90 4YU (GB); Alden, Laurence, Droitwich Spa, Worcestershire WR9 8UQ (GB); Ramsey, Blair, Barford, Warwickshire CV35 8DX (GB); Griffiths, Michael, Bromsgrove, Worcestershire B60 1HF (GB)
(74) Representative: Bailey, Richard Alan

(57) **Abstract**

A control system is described that comprises a manifold (14), at least one valve device (18) operable to control the delivery of fluid from the manifold (14), and a drive member (20) located within the manifold (14) and rotatable to control the operation of the at least one valve device (18).

## Description

This invention relates to a control system. For example, the control system may form part of a fuel system for use in the supply of fuel to an aircraft engine. In one particular example, the invention relates to a fuel system permitting control over the fuel staging system of such an engine.

It is known to provide an engine with a fuel system including a series of pilot valves and a series of main valves, or a series of valves having pilot and main delivery modes. In such arrangements it is necessary to provide a control arrangement operable to control which of the valves are operable, or to control the delivery modes of the valves, at a given time to ensure that fuel is correctly delivered to the engine.

US 4036246 describes a fuel system in which a series of linkages are provided to control the operation of the valves. The linkages together form a unison ring. The linkages are movable by an appropriate actuator. In many arrangements the linkages are located externally but, in the arrangement of US 4036246, they are located within the manifold used to deliver fuel to the valves.

The use of linkages in controlling the operation of the valves results in the introduction of a degree of hysteresis and lost motion into the system which is undesirable. Furthermore, in the harsh environment of an aircraft engine fuel supply system, this hysteresis and lost motion is even more pronounced due to temperature mismatch and vibratory effects. It is an object of the invention to provide a control system, for example suitable for use in a mechanically actuated fuel system, of improved stiffness that is less susceptible to the effects of temperature and vibration.

According to the present invention there is provided a control system comprising a manifold, at least one valve device operable to control the delivery of fluid from the manifold, and a drive member located within the manifold and rotatable to control the operation of the at least one valve device.

The control system may comprise part of a fuel system, for example for an aircraft engine, the manifold comprising a fuel manifold from which fuel is delivered, in use, via the valve devices. However, the invention is also applicable to other control systems.

Preferably, the manifold further houses at least part of an input gear arrangement whereby the drive member is rotated. An input drive shaft may be provided to transmit rotary motion from a motor to the drive member and/or input gear arrangement. The input drive shaft may be located within a fuel supply line whereby fuel is supplied to the manifold, thereby negating the need for fuel/air dynamic seal arrangements. Alternatively, the input drive shaft may pass through a seal arrangement into the manifold and/or input gear arrangement.

The motor may be an electrically driven motor. Alternatively, it may comprise a hydraulic motor driven, for example, using pressurised fuel.

The manifold preferably houses a series of further drive members, or alternatively one continuous drive member, and gear arrangements arranged to form a drive train preferably in the form of a continuous loop. Each gear arrangement is preferably further arranged to transmit rotary motion to one or more of said valve devices.

A sensor may be provided to monitor the rotary position of the drive member, the input drive shaft and/or the motor to provide an output signal representative of the operating mode of the valve devices. Additional sensors may be provided to monitor the positions of the valve devices.

Preferably there is a continuous flow of fuel through the valve devices at all engine operating conditions, thereby providing a means of maintaining the temperature of the valve devices at an acceptable level.

The invention will further be described, by way of example, with reference to the accompanying drawings, in which:

### Figure 1, which is a diagram illustrating a fuel system in accordance with one embodiment of the invention; and

Figure 2 is a diagram illustrating a control system in accordance with another embodiment.

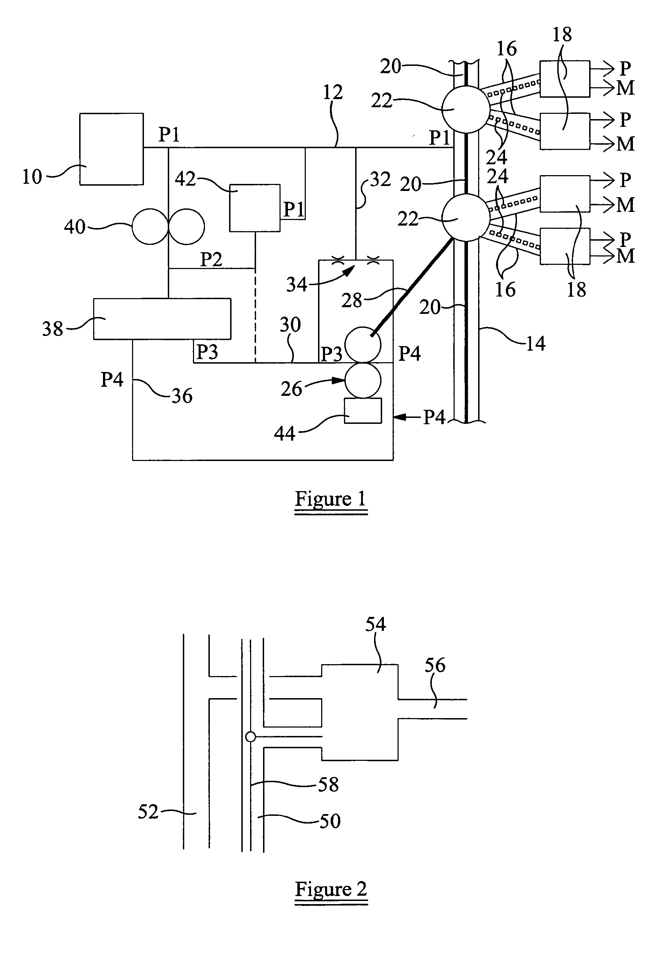

The fuel system illustrated in Figure 1 comprises a hydro-mechanical unit (HMU) 10 arranged to supply fuel through a supply line 12 to a fuel manifold 14. The HMU 10 may take a range of forms, for example it may comprise a high pressure fuel pump arranged to supply fuel through a metering valve, the operation of which is controlled to control the rate at which fuel is supplied to the supply line 12. A spill valve arrangement may be incorporated into the HMU 10 to allow excess fuel to be returned to inlet side of the high pressure pump. Fuel systems of this general type are well known and so the HMU 10 will not be described in further detail.

The manifold 14 communicates via a series of staging valve lines 16 with a series of staging valves 18. Each staging valve 18 is operable, in this embodiment, to supply fuel through a series of pilot outlet openings and a series of main outlet openings, the staging valves 18 incorporating a control mechanism whereby certain of the outlet openings can be closed such that, for example, fuel can be delivered in a pilot delivery mode only. A number of valve designs of this general type are known, so no further description thereof is included herein. However, the design of the valves is such that there is continuous flow of fuel through the valves at all engine operating conditions thus ensuring that the temperature of the valves is maintained at an acceptable level to prevent fuel degradation.

Located within the manifold 14 is a series of rotatable drive members 20 in the form of flexible drive shafts. Alternatively, one continuous rotatable drive member could be located within the manifold in the form of one continuous flexible drive shaft. The drive shaft or shafts are arranged to be rotated, in use, about their longitudinal "axes", and held against significant "radial" movement. The flexible drive shafts are of high torsional stiffness and may be of the type described in US 4112708. The drive members 20 are interconnected with one another by means of gear arrangements 22, the drive members 20 and gear arrangements 22, together forming a drive train in the form of a continuous loop extending about the entire manifold 14. The gear arrangements 22 transmit rotary motion between the adjacent members 20 and may take a range of forms. For example they may comprise worm/wheel type arrangements or spur/bevel gear arrangements. The gear arrangements 22, as well as transmitting rotary motion between adjacent ones of the drive members 20, are further arranged to drive a series of output shafts 24 for rotation, the output shafts 24 being located within respective ones of the staging valve lines 16. The output shafts 24 are connected to the control mechanisms of respective ones of the staging valves 18 and are arranged such that rotation of the drive members 20 which is transmitted through the gear arrangements 22 to the output shafts 24 controls the mode of operation of each of the staging valves 18.

The fuel system illustrated in Figure 1 further comprises a hydraulic motor 26 arranged to be driven using fuel under pressure. An input drive shaft 28 interconnects the motor 26 and an input one of the gear arrangements 22, and it will be appreciated that operation of the motor 26 can thus be used to control the rotary positions of the drive members 20, gear arrangements 22, output drive shafts 24, and hence the operating modes of the staging valves 18. In the arrangement illustrated, the input drive shaft 28 passes directly into one of the gear arrangements 22, through a suitable sealing arrangement provided in the gear arrangement 22 and/or manifold 14. However, arrangements are possible in which the input drive shaft 28 is housed within a fuel line connected to the manifold 14, for example in some arrangements the input drive shaft 28 may extend through part of the supply line 12 and into the manifold 14. This would advantageously negate the need for a suitable fuel/air dynamic sealing arrangement.

In the arrangement illustrated in Figure 1, the motor 26 comprises a hydraulic gear motor, the operation of which is controlled by a servo-valve and torque motor arrangement 38 hereinafter referred to as the control valve 38. The motor 26 is connected between first and second outputs of the control valve 38 via respective fuel lines 30 and 36. These fuel lines 30, 36 are then connected via a fixed orifice arrangement 34 to the supply line 12, via a line 32, which is held at a pressure P1 equal to or substantially equal to the fuel pressure at which fuel is supplied by the HMU 10.

A servo-pump 40 is arranged to pressurise a quantity of fuel from the line 12 to an increased pressure P2, fuel from the servo-pump 40 being supplied to the control valve 38. This increased pressure is required to provide satisfactory control of the motor 26 via the control valve 38. As well as controlling the operation of the motor 26, the control valve 38 and fixed orifice arrangement 34 ensure that adequate flow of fuel is maintained through the fuel lines 30, 36 at all engine operating conditions. This ensures that the temperature of the fuel system, and in particular that part of the fuel system which is located in the high temperature core zone of the engine, is maintained at an acceptable level, thus minimising the risk of fuel degradation. A pressure limiting valve 42 is connected between the output of the servo-pump 40 and the line 12 to prevent the pressure P2 rising to an unacceptably high pressure.

In use, depending upon the operation of the control valve 38, the respective pressures P3 and P4 in the fuel lines 30 and 36 are adjusted to control the operation of the motor 26. For example, with the control valve 38 operated such that P3 is greater than P4 the motor 26 rotates in a first direction. Such rotation of the motor 26 is transmitted to the staging valves 18 as described hereinbefore and is used to drive the staging valves 18 from, for example, a pilot operating mode to a main operating mode. In another operating mode of the control valve 38, P3 is less than P4 resulting in rotation of the motor 26 in a second, opposite direction. Such rotation is transmitted to the staging valves 18 resulting in the staging valves 18 returning from, for example, the main delivery mode to the pilot delivery mode. During certain operating conditions continued operation of the servo-pump 40 may result in the pressure P2 rising to the point at which the pressure limiting valve 42 opens to prevent the pressure P2 rising to an excessively high level.

A sensor 44 is provided to monitor the operation of the motor 26. By sensing the position of the motor 26 it will be appreciated that a signal representative of the position or operating mode of the staging valves 18 can be produced. This signal is used by an Engine Control Unit (not shown) in conjunction with known engine control loop staged combustion algorithms (ie pilot/mains flow split calculations) to provide a control signal to the control valve 38 that is required in providing the necessary control of the operation of the motor 26, thereby permitting accurate control over the staging valves 18.

In normal operation, it will be appreciated that the fuel system will spend considerable periods of time in conditions in which it is not desired to switch the staging valves 18 between their pilot and main operating modes. Although, desirably, the motor 26 will not move during these periods, in practise it is likely that the control valve 38 will be constantly or regularly changing position, holding the pressures P3 and P4 at substantially the same level. In practise, there will be some periods where P3 is slightly greater than P4 and so the motor operates slowly in the first direction, and other periods where P3 is slightly below P4 and during these periods the motor 26 will operate slowly in the second direction. The nature of the gear arrangement 22 is preferably such that these small perturbations in the rotation of the motor 26 cause little if any adjustment in the operating modes of the valves 18.

It will be appreciated that, in use, there is sufficient pressure difference (P3-P4) across the motor 26 (for example approximately 200psid) to drive the motor 26 in the valve opening direction, and thereby ensure that the system operates reliably. A lower pressure difference (P4-P3) driving the motor 26 in the valve closing direction is sufficient to ensure reliable valve movement as the staging valves 18 will typically include springs biasing them towards their closed positions. Further, in the event of a loss of electrical power to the system, the control valve 38 is biased to ensure that the motor 26 is driven in the valve closing direction.

The arrangement described hereinbefore is advantageous compared to known arrangements in that the number of fuel lines provided in the high temperature core zone of the engine is reduced, and there is continuous flow of fuel in the remaining lines, thereby avoiding fuel lines containing stagnant fuel in a high temperature environment, and hence negating the need of an additional requirement for fuel cooling. The location of the drive members 20 within the manifold 14 and also the input drive shaft 28 extending through part of the supply line 12 and into the manifold 14 avoids the necessity of providing dynamic fuel/air seals in the high temperature core zone of the engine. Further, the provision of the drive members 20 and gear arrangements 22 in the form of a continuous loop results in the system being of reduced sensitivity to single point failures in that, for example, continued operation of the staging valves 18 may be achievable despite the failure of, for example, one of the drive members 20. In addition, the provision of the sensor 44 permits accurate, closed loop control over the operation of the staging valves.

The control mechanisms of the staging valves 18 may take a range of forms. Where a rotary input is required this may be derived directly from the rotation of the output drive shafts, conveniently via a gearbox. Where a linear input is required, any suitable rotary to linear conversion device may be used, for example a ball screw-type device, to convert the rotary motion of the output drive shaft to the linear motion of the staging valve 18. In either case, down gearing may be achieved at this point.

A number of modifications and alterations may be made to the arrangement described hereinbefore. For example, rather than use a hydraulically driven motor to control the rotation of the drive members 20, an electrically driven motor could be used. Where the input drive shaft is located within a fuel line, then a fuel drain line may be connected to the motor to permit the escape of fuel therefrom. Another possibility is to provide a dedicated input gear arrangement rather than adding this functionality to one of the gear arrangements used to drive the output drive shafts. It may, alternatively, be possible to incorporate the motor into the manifold 14. Further, although the arrangement described hereinbefore makes use of staging valves 18 switchable between pilot and main operating modes, it will be appreciated that separate pilot injectors and main injectors may be provided, control over the operation of which is achieved using a system similar to that described hereinbefore. Furthermore, it is recognised that the arrangement of a drive member located in a pipe and rotatable to control the operation of at least one output device could be applied to an actuator control system, for example the normally hydraulically operated flight control actuation system of an aircraft, as well as the engine fuel system described hereinbefore. A scheme of this type is illustrated, diagrammatically, in Figure 2. In this scheme, high and low pressure hydraulic manifolds 50, 52 are connected to respective inputs of a control valve 54. The control valve 54 is operable to control the fluid pressure within a line 56 by controlling the connection of the line 56 to the manifolds 50, 52. The control valve 54 is mechanically actuated, and a drive input thereof is connected to a rotatable drive member 58 located within, in this case, the high pressure manifold 50 such that rotation of the drive member 58 controls the setting of the control valve 54 and thereby controls the fluid pressure within the line 56. It will be appreciated that a system of this general type may have a wide range of applications. A number of other modifications and alterations are possible without departing from the scope of the invention.

## Claims

1. A control system comprising a manifold (14), at least one valve device (18) operable to control the delivery of fluid from the manifold (14), and a drive member (20) located within the manifold (14) and rotatable to control the operation of the at least one valve device (18).

2. A system according to Claim 1, wherein the system comprises part of a fuel system, the manifold (14) comprising a fuel manifold from which fuel is delivered, in use, via the valve devices (18).

3. A system according to Claim 1 or Claim 2, wherein the manifold (14) further houses at least part of an input gear arrangement (22) whereby the drive member (20) is rotated.

4. A system according to Claim 3, wherein an input drive shaft (28) is provided to transmit rotary motion from a motor (26) to the drive member (20) and/or input gear arrangement (22).

5. A system according to Claim 4, wherein the input drive shaft (28) is located within a fuel supply line whereby fuel is supplied to the manifold.

6. A system according to Claim 4, wherein the input drive shaft (28) passes through a seal arrangement into the manifold (14) and/or input gear arrangement (22).

7. A system according to any of Claims 4 to 6, wherein the motor (26) is an electrically driven motor.

8. A system according to any of Claims 4 to 6, wherein the motor (26) comprises a hydraulic motor driven using pressurised fuel.

9. A system according to any of the preceding claims, wherein the manifold (14) houses a series of further drive members (20), and gear arrangements (22) arranged to form a drive train.

10. A system according to Claim 9, wherein the drive train is in the form of a continuous loop.

11. A system according to Claim 9 or Claim 10, wherein each gear arrangement (22) is arranged to transmit rotary motion to one or more of said valve devices (18).

12. A system according to any of the preceding claims, further comprising a sensor (44) to provide an output signal representative of the operating mode of the valve devices (18).

13. A system according to any of the preceding claims, wherein there is a continuous flow of fuel through the valve devices (18) at all engine operating conditions, in use, thereby providing a means of maintaining the temperature of the valve devices (18) at an acceptable level.
